(19) Europäisches Patentamt
European Patent Office
Office européen des brevets

(11) EP 1 431 621 A1

(12) EUROPÄISCHE PATENTANMELDUNG

(43) Veröffentlichungstag:
23.06.2004 Patentblatt 2004/26

(51) Int Cl.7: F16H 61/00

(21) Anmeldenummer: 03027621.6

(22) Anmeldetag: 02.12.2003

(84) Benannte Vertragsstaaten:
AT BE BG CH CY CZ DE DK EE ES FI FR GB GR
HU IE IT LI LU MC NL PT RO SE SI SK TR
Benannte Erstreckungsstaaten:
AL LT LV MK

(30) Priorität: 20.12.2002 DE 10260193

(71) Anmelder: Bayerische Motoren Werke
Aktiengesellschaft
80809 München (DE)

(72) Erfinder:
• Wolf, Lothar
81539 München (DE)
• Kress, Thomas
85221 Dachau (DE)
• Schleicher, Thomas
80636 München (DE)

(54) Toroidgetriebe mit Steuerung der Kontaktnormalkraft

(57) Reibradgetriebe für Fahrzeuge, mit einer Antriebsscheibe (1), einer Abtriebsscheibe (2), mindestens einer Reibrolle (3,4), die zwischen der Antriebsscheibe und der Abtriebsscheibe angeordnet ist und die zur Drehmomentübertragung von der Antriebsscheibe auf die Abtriebsscheibe vorgesehen ist, einem Getriebesteuergerät (12), einer Abstützeinrichtung (7), auf welcher die mindestens eine Reibrolle gelagert ist, wobei die Abstützeinrichtung zur Abstützung der von der mindestens einen Reibrolle ausgeübten Reaktionskraft vorgesehen ist, einer Normalkrafterzeugungseinrichtung (5) zur Erzeugung einer Kontaktnormalkraft, welche die Antriebsscheibe, die Abtriebsscheibe und die mindestens eine Reibrolle gegeneinander spannt, wobei die Normalkrafterzeugungseinrichtung (5) durch das Getriebesteuergerät angesteuert ist. Während des Betriebs des Reibradgetriebes wird mindestens eine Betriebsgröße überwacht und die Kontaktnormalkraft in Abhängigkeit von mindestens dieser einen Betriebsgröße eingestellt. Zumindest in manchen Betriebszuständen des Reibradgetriebes stellt das Getriebesteuergerät die Kontaktnormalkraft unabhängig von der Größe der momentanen Reaktionskraft ein.

Fig. 2

EP 1 431 621 A1

**Beschreibung**

Die vorliegende Erfindung betrifft ein Reibradgetriebe, insbesondere ein Toroidgetriebe mit einer Getriebesteuerung gemäß dem Oberbegriff des Patentanspruches 1.

Ein derartiges Toroidgetriebe ist aus der DE 100 47 139 A1 bekannt. Toroidgetriebe weisen bekanntermaßen eine Antriebsscheibe, eine Abtriebsscheibe und mindestens eine, idR. aber drei dazwischen angeordnete Reibrollen auf. An der Antriebsscheibe oder an der Abtriebsscheibe ist eine "Normalkrafterzeugungseinrichtung" vorgesehen, welche die Scheiben gegeneinander drückt, so dass Drehmoment von der Antriebsscheibe über die Reibrollen auf die Abtriebsscheibe übertragbar ist. Die Kraftübertragung von der Antriebsscheibe auf die Reibrollen und von der Reibrollen auf die Abtriebsscheibe erfolgt jeweils über einen Kontaktpunkt. Dabei besteht kein direkter Kontakt zwischen den "Reibelementen". Die Kraft- bzw. Drehmomentübertragung erfolgt über ein Traktionsöl in den Reibpunkten. Zur Übertragung eines vorgegebenen Drehmoments ist eine Mindestkontaktnormalkraft erforderlich. Prinzipiell wäre es möglich, die Kontaktnormalkraft stationär so zu wählen, dass sämtliche während des Betriebs des Toroidgetriebes auftretenden Drehmomente sicher übertragen werden. Dies hätte jedoch eine permanent überhöhte Kontaktnormalkraft zur Folge, das heißt eine permanente "Überpressung" der Kontaktpunkte. Eine permanente Überpressung des Kontaktpunktes würde sich negativ auf die Lebensdauer der Reibelemente sowie auf den Wirkungsgrad des Getriebes auswirken.

Es sind bereits verschiedene Ansätze bekannt, die Kontaktnormkraft in Abhängigkeit vom Betriebszustand des Toroidgetriebes einzustellen, das heißt die Kontaktnormalkraft bei einem geringen zu übertragenden Drehmoment zu verringern und bei einem hohen zu übertragenden Drehmoment entsprechend zu erhöhen.

Bei Toroidgetrieben sind die Reibrollen drehbar an "Rollergabeln" gelagert, auf die eine hydraulische Kraft aufgebracht wird, um die Reibrollen in einer Sollstellung zwischen der Antriebsscheibe und der Abtriebsscheibe zu halten. Die von den Reibrollen ausgeübte Reaktionskraft wird dabei durch eine Hydraulik, d. h. durch "Traktionssteller" abgestützt. Die Reaktionskraft korreliert mit dem vom Toroidgetriebe übertragenen Drehmoment und kann als "Tangentialkraft", oder genauer gesagt, als Summe der an der "Reibscheibe" auftretenden Tangentialkräfte interpretiert werden. Es wurde bereits erwogen, die Kontaktnormalkraft proportional zur Tangentialkraft einzustellen. Die Kontaktnormalkraft und die Tangentialkraft stünden dann immer in einem festgelegten Verhältnis zueinander. Eine derartige "dauerhafte feste Kopplung" der Kontaktnormalkraft an die momentan übertragene Tangentialkraft ist jedoch in vielen Betriebszuständen nicht optimal. Beispielsweise besteht bei instationären Vorgängen, das heißt bei einer schnellen Änderung des vom Toroidgetriebe zu übertragenden Drehmoments und einer damit verbundenen schnellen Änderung der Reibrollenstellung die Gefahr, dass zwischen der Reibrolle und der Antriebsscheibe bzw. der Abtriebsscheibe ein unakzeptabel großer Schlupf bzw. eine dauerhafte Schädigung auftritt.

Aufgabe der Erfindung ist es, ein Reibradgetriebe, insbesondere ein Toroidgetriebe, mit einer Getriebesteuerung zu schaffen, bei dem das Steuerungskonzept für die Kontaktnormalkraft besser auf wechselnde Betriebszustände abgestimmt ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem Reibradgetriebe, insbesondere einem Toroidgetriebe für Fahrzeuge aus, das eine Antriebsscheibe, eine Abtriebsscheibe und mindestens eine zwischen der Antriebsscheibe und der Abtriebsscheibe angeordnet Reibrolle aufweist, die zur Drehmomentübertragung von der Antriebsscheibe auf die Abtriebsscheibe vorgesehen ist. Ferner ist eine hier ganz allgemein als "Abstützeinrichtung" bezeichnete Einrichtung vorgesehen, auf der die mindestens eine Reibrolle drehbar gelagert ist. Wenn im folgenden, insbesondere in den Patentansprüchen, der Begriff "Reibrolle" verwendet wird, dann ist dies keinesfalls einschränkend, sondern ganz allgemein zu verstehen und allgemein als "Reibelement" bzw. "Reibkörper" zu interpretieren. Die "Abstützeinrichtung" kann durch eine Rollergabel und eine darauf wirkende Verstellhydraulik gebildet sein. Die Abstützeinrichtung bzw. die Verstellhydraulik sind zur Abstützung der von der Reibrolle ausgeübten Reaktionskraft, die im folgenden auch als Tangentialkraft oder Summe der Tangentialkräfte bezeichnet wird, vorgesehen. An der Abtriebsscheibe oder an der Antriebsscheibe ist eine "Normalkrafterzeugungseinrichtung" bzw. ein Normalkraftsteller, z.B. in Form einer Spannhydraulik vorgesehen, welche die Antriebsscheibe, die Abtriebsscheibe und die mindestens eine Reibrolle gegeneinander spannt. Während des Betriebs des Toroidgetriebes wird mindestens eine Betriebsgröße überwacht, wobei die Kontaktnormalkraft in Abhängigkeit von dieser mindestens einen Betriebsgröße eingestellt wird. Vorzugsweise werden mehrere Betriebsgrößen gleichzeitig überwacht und die Kontaktnormalkraft in Abhängigkeit dieser mehrerer Betriebsgrößen eingestellt.

Der Kern der Erfindung besteht in einem Getriebesteuergerät bzw. in einem Getriebesteuerungskonzept, bei dem zumindest in manchen Betriebszuständen des Toroidgetriebes die Kontaktnormalkraft unabhängig von der Größe der momentanen Reaktionskraft eingestellt werden kann. Anders ausgedrückt ist zumindest in manchen oder in allen Betriebszuständen des Toroidgetriebes die Kontaktnormalkraft nicht, zumindest nicht ausschließlich an die Reaktionskraft bzw. Tangentialkraft, das heißt nicht an das momentan vom Toroidgetriebe übertragene Drehmoment gekoppelt. Eine derartige "funktionale Trennung" der Steuerung der Tangentialkraft und der Kontaktnormalkraft ermöglicht eine sehr variable Einstellung der Kontaktnormalkraft und somit eine optimale Anpassung der Kontaktnormalkraft an eine Vielzahl von Betriebszuständen.

Die Kontaktnormalkraft wird in Abhängigkeit mindestens einer, vorzugsweise aber in Abhängigkeit mehrerer Betriebsparameter des Toroidgetriebes eingestellt.

Der optimale Reibungsbeiwert an den Kontaktpunkten zwischen der bzw. den Reibrollen und der Antriebsscheibe und der Abtriebsscheibe und somit die einzustellenden Kontaktnormakraft wird vorzugsweise aus relevanten Betriebsparametern des Toroidgetriebes ermittelt, wie:

- Dynamik der Kontaktpunktverlagerung
- Kontaktpunktlage und Kontaktpunktgeometrie
- zu übertragende Tangentialkraft bzw. zu übertragendes Drehmoment
- Umfangsgeschwindigkeit der Reibrolle bzw. der Antriebsscheibe und der Abtriebsscheibe
- Getriebeöltemperatur.

Die Ermittlung der momentan optimalen Kontaktnormalkraft erfolgt auf der Basis von Kennfeldern bzw. physikalischen Traktionsmodellen (Algorithmen), die im Getriebesteuergerät gespeichert sind.

Zur Erzeugung einer Steuergröße für den Normalkraftsteller wird mindestens eine Betriebsgröße erfasst, wie zum Beispiel die räumliche Stellung der Reibrolle bzw. der Reibrollen, das heißt der "Rollenwinkel". Diese Betriebsgröße wird in die Berechnung der optimalen Kontaktnormalkraft einbezogen. Bislang bezog sich die Beschreibung primär auf die Ermittlung der optimalen Kontaktnormalkraft im stationären bzw. annähernd stationären Betrieb des Toroidgetriebes.

Instationäre Vorgänge zeichnen sich dadurch aus, dass das vom Toroidgetriebe zu übertragende Drehmoment einen steilen Drehmomentgradient aufweist. Das zu übertragende Drehmoment ändert sich also schnell. Eine schnelle Drehmomentänderung ist häufig mit einer schnellen Änderung der Reibrollenstellung verbunden. In solchen Fällen erfolgt eine hochdynamische Verlagerung der Reibkontaktpunkte zwischen der Reibrolle und der Antriebsscheibe und der Abtriebsscheibe. Instationäre Vorgänge lassen sich mit den heute bekannten Algorithmen bzw. in Kennfeldern erfassten Daten nur unzureichend beschreiben.

Bei instationären Vorgängen sind zu unterscheiden

- aktive Veränderung der Kontaktbedingungen und
- passive Veränderung der Kontaktbedingungen.

Von einer aktiven Veränderung der Kontaktbedingungen spricht man dann, wenn der Fahrer über das Gaspedal ein höheres bzw. niedrigeres (verändertes) Antriebs- bzw. Getriebemoment anfordert. Dies ist mit einer Veränderung der "Ziel-Drehzahl" des Getriebeeinganges verbunden. Die Stellung der Reibrollen wird entsprechend des neuen vom Fahrer "gewählten" Betriebspunktes durch den bzw. die Tangentialkraftsteller verstellt.

Von einer passiven Veränderung der Kontaktbedingungen spricht man, wenn dem Getriebe von "außen" eine bestimmte Drehzahl bzw. ein Drehzahlsprung aufgeprägt wird. Dies ist beispielsweise dann der Fall, wenn beim Beschleunigen auf glatter Fahrbahn, wenn einzelne Antriebsräder kurzzeitig durchdrehen (slipstick-Effekt).

Nach einer Weiterbildung der Erfindung ist vorgesehen, dass bei manchen Betriebszuständen die Kontaktnormalkraft temporär über die für stationären Betrieb erforderliche Kontaktnormalkraft hinaus erhöht wird. Der "Dynamikanteil" der Betriebsbedingungen des Toroidgetriebes wird also durch eine temporäre Erhöhung der Kontaktnormalkraft berücksichtigt. Eine damit einher gehende temporäre Wirkungsgradeinbuße wird aus Sicherheitsgründen bewusst in Kauf genommen.

Im folgenden wir die Erfindung im Zusammenhang mit der Zeichnung näher erläutert. Es zeigen:

| Figur 1,2 | den prinzipiellen Aufbau eines Toroidgetriebes gemäß der Erfindung in schematischer Darstellung; |
| --- | --- |
| Figuren 3 - 10 | das Steuerungskonzept gemäß der Erfindung. |

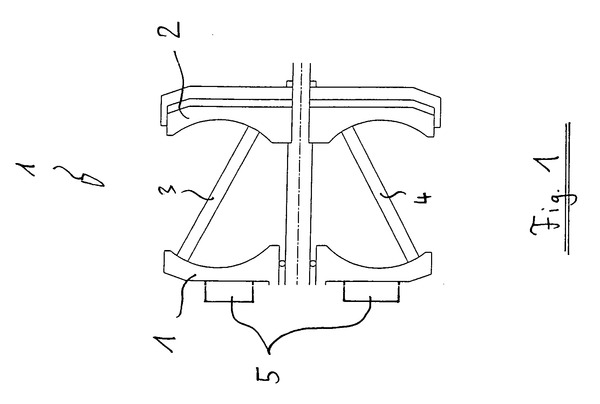

Figur 1 zeigt das Grundprinzip eines Toroidgetriebes mit einer Antriebsscheibe 1, einer Abtriebsscheibe 2 und dazwischen angeordneten Reibrollen 3, 4, die zur Drehmomentübertragung von der Antriebsscheibe 1 auf die Abtriebsscheibe 2 vorgesehen sind. An der Antriebsscheibe 1 ist eine Normalkrafterzeugungseinrichtung, zum Beispiel eine Spannhydraulik 5 vorgesehen, welche die Antriebsscheibe 1, die Abtriebsscheibe 2 und die dazwischen angeordneten Reibrollen 3, 4 in Axialrichtung zusammendrückt. Die Spannhydraulik erzeugt somit eine Kontaktnormalkraft zwischen den Reibrollen 3, 4 und der Antriebsscheibe 1 bzw. der Abtriebsscheibe 2. Die Kontaktnormalkraft ermöglicht eine Drehmomentübertragung von der Antriebsscheibe 1 auf die Abtriebsscheibe 2. Die Spannhydraulik 5 kann auch an der Abtriebsscheibe 2 angeordnet sein.

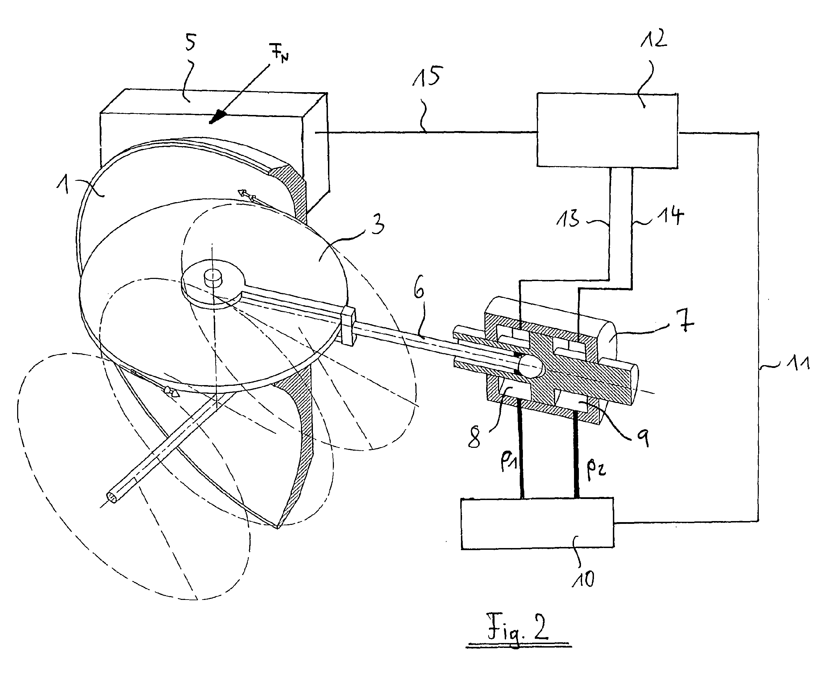

Figur 2 zeigt eine Reibrolle 3 sowie in Teilschnittdarstellung eine Antriebsscheibe bzw. eine Abtriebsscheibe, die hier mit dem Bezugszeichen 1 bezeichnet ist und an der die Normalkrafterzeugungseinrichtung 5 angeordnet ist. Die Reibrolle 3 ist drehbar an einem Abstützelement 6 gelagert, das mit einem Tangentialsteller 7 verbunden ist. Das Abstützelement 6 hat hier die Form einer "Rollergabel". Der Tangentialsteller 7 ist durch eine Kolben/Zylinderanordnung mit einem ersten Zylindervolumen 8 und einem zweiten Zylindervolumen 9 gebildet. Im ersten Zylindervolumen 8 herrscht ein Druck $P_1$ und in zweitem Zylindervolumen 9 ein Druck $P_2$. Die Drücke $P_1$, $P_2$ werden durch eine Hydraulik 10 gesteuert.

Das vom Toroidgetriebe übertragene Drehmoment korreliert mit den Tangentialkräften, das heißt mit den Kräften, die über die Rollergabeln in die zugeordneten Tangentialkraftsteller 7 eingeleitet werden, wobei in Fig. 2 lediglich eine Reibrolle 3 mit ihrer zugeordneten Rollergabel 6 dargestellt ist. Die "Reaktionskraft", die durch den Tangentialkraftsteller 7 abgestützt wird, ist proportional zur Druckdifferenz $P_2 - P_1$. Die Hydraulik 10 ist über elektrische Leitungen 11 mit einem Getriebesteuergerät 12 verbunden. Am Tangentialkraftsteller 7 können Drucksensoren vorgesehen sein, welche die Drücke $P_1$, $P_2$ messen und über elektrische Leitungen 13, 14 dem Getriebesteuergerät 12 zuführen. Das Getriebesteuergerät 12 ist über eine elektrische Steuerleitung 15 mit der Normalkrafterzeugungseinrichtung 5 verbunden und steuert in Abhängigkeit von mindestens einer Betriebsgröße, vorzugsweise aber in Abhängigkeit von mehreren Betriebsgrößen die Kontaktnormalkraft $F_N$.

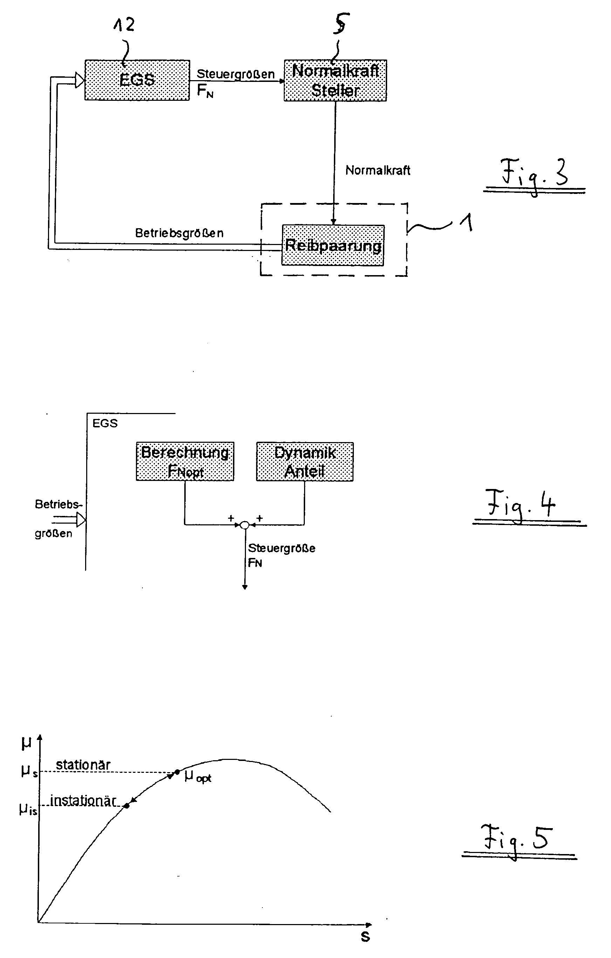

Figur 3 beschreibt schematisch das Steuerungskonzept gemäß der Erfindung. Aus dem aktuellen Betriebszustand des Toroidgetriebes 1 werden eine oder mehrere Betriebsgrößen, wie

- Kontaktpunktlage und Kontaktpunktgeometrie und/ oder
- zu übertragenden Tangentialkraft und/oder
- Umfangsgeschwindigkeit an der Reibrolle bzw. an der Antriebsoder Abtriebsscheibe und/oder
- Getriebeöltemperatur

erfasst und vom Getriebesteuergerät 12 in eine Steuergröße für die Normalkrafterzeugungseinrichtung 5 umgewandelt. Diese erzeugt hieraus eine Normalkraft.

Wesentlich ist, dass die Normalkraft zumindest in manchen Betriebszuständen des Toroidgetriebes 1 unabhängig von der Größe der momentan von der Reibrolle bzw. den Reibrollen ausgeübten Reaktionskraft, das heißt unabhängig von der momentan übertragenen Tangentialkraft eingestellt wird bzw. eingestellt werden kann. In die Steuerung zur Erzeugung der Normalkraft kann aber sehr wohl die "zu übertragende" Tangentialkraft eingehen, die von der "momentan übertragenen" Tangentialkraft zu unterscheiden ist.

Figur 4 beschreibt schematisch das Steuerungskonzept für die Kontaktnormalkraft bei instationären Vorgängen. Instationäre Vorgänge zeichnen sich durch eine relativ schnelle Änderung des vom Toroidgetriebe zu übertragenden Drehmoments und somit häufig auch durch eine schnelle Änderung der Reibrollenstellung aus. Derartige instationäre "Übergangszustände" sind steuerungs- bzw. regelungstechnisch schwer zu beherrschen und nur schwer durch Algorithmen zu beschreiben. Nicht zuletzt aufgrund der Dynamik und dem mathematisch scher erfassbaren Schwingungsverhalten der Anpresseinrichtung und der Reibscheiben besteht die Gefahr, das kurzzeitig ein unzulässig hoher Schlupf zwischen den Reibrollen und der Antriebsscheibe bzw. der Abtriebsscheibe auftritt. Um dies zu vermeiden wird bei instationären Vorgängen bei der Steuerung der Kontaktnormalkraft ein zusätzlicher "Dynamikanteil" berücksichtigt, was schematisch in Figur 4 dargestellt ist. Dabei wird temporär die Kontaktnormalkraft über die stationär optimale Kontaktnormalkraft hinaus, die mit $F_{Nopt}$ bezeichnet ist, erhöht.

Im Reibwertschlupfdiagramm der Figur 5 entspricht eine derartige temporäre Erhöhung der Kontaktnormalkraft einer temporären Verringerung des ausgenutzten Reibwertes von $\mu_s$ (stationär) auf $\mu_{is}$ (instationär).

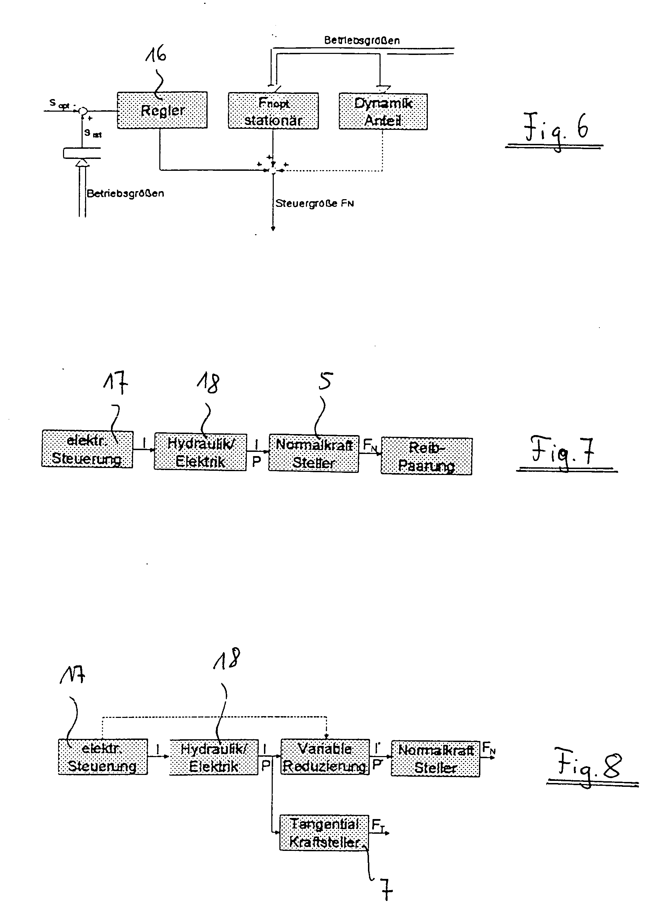

Beim Ausführungsbeispiel der Figur 6 wird bei der Steuerung der Kontaktnormalkraft $F_N$ zusätzlich der in den Kontaktpunkten auftretende Schlupf berücksichtigt. Wenn der momentane Schlupf $s_{ist}$ von einem vorgegebenen Sollschlupf bzw. Optimalschlupf $s_{opt}$ abweicht, greift ein Regler 16 korrigierend ein und erhöht bzw. verringert entsprechend die Kontaktnormalkraft $F_N$.

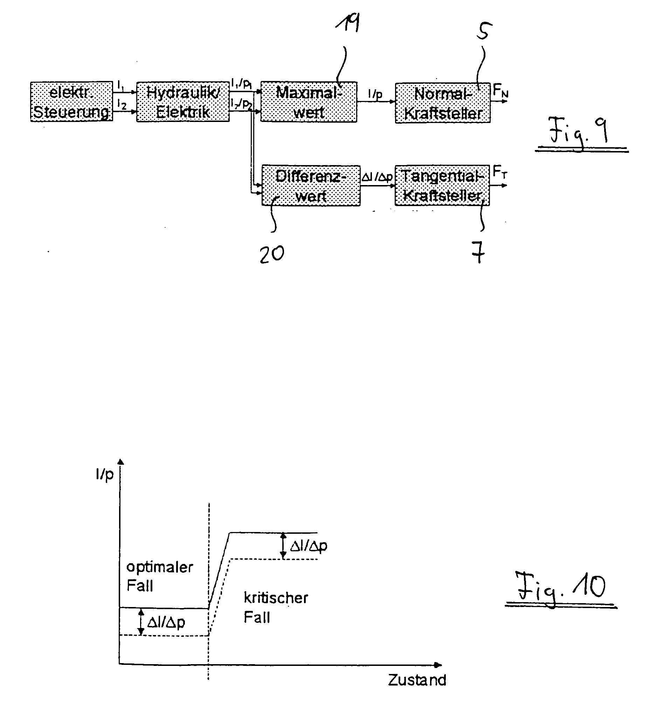

Figur 7 zeigt schematisch das bereits erläuterte Grundprinzip der Erfindung, wonach die Kontaktnormalkraft vollständig unabhängig von der momentanen Reaktionskraft bzw. der momentanen Tangentialkraft eingestellt werden kann. Mittels einer Steuer- bzw. Regeleinrichtung 17, die Teil der Getriebesteuerung ist, wird eine elektrohydraulische Leistungsstufe 18 bzw. ein elektrohydraulischer Wandler angesteuert, welche bzw. welcher wiederum den "Normalkraftsteller", d.h. die Normalkrafterzeugungseinrichtung 5 ansteuert. Der elektrohydraulische Wandler kann z.B. durch ein Piezoelement gebildet sein, das auf eine Hydraulik einwirkt. Die Normalkrafterzeugungseinrichtung 5 erzeugt die Normalkraft $F_N$, welche auf die Reibpaarung wirkt.

Figur 8 zeigt ein Ausführungsbeispiel, bei dem das Verhältnis zwischen der Normalkraft $F_N$ und der Reaktionskraft bzw. Tangentialkraft $F_T$ bei bestehender Stellgrößenverkopplung mittels einer variablen Reduzierungsstufe verstimmt wird.

Figur 9 zeigt ein Ausführungsbeispiel, bei dem das Verhältnis zwischen der Normalkraft $F_N$ und der Tangentialkraft $F_T$ bei bestehender Stellgrößenverkopplung verstimmt wird und die Tangentialkraft $F_T$ über die Stellgrößendifferenz eingestellt wird. Figur 10 erläutert dies in einem Diagramm. Beispielsweise betragen in einem ersten Betriebszustand die Drücke

$$P_1 = 20 \text{ bar}$$

$$P_2 = 0 \text{ bar (vgl. Fig. 1).}$$

Eine Auswahleinrichtung 19 wählt entsprechend den höheren Druck, das heißt $P_1 = 20$ bar aus und erzeugt entsprechend die Normalkraft $F_N$. Ein Subtrahierer 20 ermittelt die Druckdifferenz und steuert in Abhängigkeit davon den Tangentialkraftsteller 7 an. Insoweit besteht kein Unterschied zum Stand der Technik.

Der Kern der Erfindung besteht nun darin, auch bei dem in den Figuren 9, 10 gezeigten Ausführungsbeispiel die Kontaktnormalkraft unabhängig von der Größe der momentanen Reaktionskraft bzw. Tangentialkraft $F_T$ einzustellen. Wenn beispielsweise ein instationärer Zustand bevorsteht, wird die Kontaktnormalkraft temporär erhöht, und zwar ohne dass dem eine Erhöhung der Tangentialkraft vorausgehen muss. Dies wird durch eine Erhöhung beider Druckniveaus $P_1$, $P_2$ erreicht. Beispielsweise werden folgende Drücke eingestellt:

$$P_1 = 50 \text{ bar}$$

$$P_1 = 30 \text{ bar}.$$

Die Kontaktnormalkraft $F_N$ wird dann entsprechend dem neuen höheren Druck $P_1 = 50$ bar eingestellt. Der Differenzdruck $P_1 - P_2$, der maßgebend für die Tangentialkraft bzw. Reaktionskraft ist, ist hingegen unverändert. Somit kann auch hier die Kontaktnormalkraft unabhängig von der Größe der momentanen Reaktionskraft bzw. Tangentialkraft eingestellt werden.

**Patentansprüche**

1.   Reibradgetriebe (1), insbesondere Toroidgetriebe (1) für Fahrzeuge, mit
   einer Antriebsscheibe (1),
   einer Abtriebsscheibe (2),
   mindestens einer Reibrolle (3, 4) , die zwischen der Antriebsscheibe (1) und der Abtriebsscheibe (2) angeordnet ist und die zur Drehmomentübertragung von der Antriebsscheibe (1) auf die Abtriebsscheibe (2) vorgesehen ist,
   einem Getriebesteuergerät (12),
   einer Abstützeinrichtung (6, 7), auf welcher die mindestens eine Reibrolle (3, 4) gelagert ist, wobei die Abstützeinrichtung (6, 7) zur Abstützung der von der mindestens einen Reibrolle (3, 4) ausgeübten Reaktionskraft ($F_T$) vorgesehen ist,
   einer Normalkrafterzeugungseinrichtung (5) zur Erzeugung einer Kontaktnormalkraft ($F_N$), welche die Antriebsscheibe (1), die Abtriebsscheibe (2) und die mindestens eine Reibrolle (3, 4) gegeneinander spannt, wobei die Normalkrafterzeugungseinrichtung (5) durch das Getriebesteuergerät (12) angesteuert ist,
   wobei während des Betriebs des Reibradgetriebes (1) mindestens eine Betriebsgröße überwacht und die Kontaktnormalkraft ($F_N$) in Abhängigkeit von mindestens dieser einen Betriebsgröße eingestellt wird,
   **dadurch gekennzeichnet, dass**
   zumindest in manchen Betriebszuständen des Reibradgetriebes (1) das Getriebesteuergerät (12) die Kontaktnormalkraft ($F_N$) unabhängig von der Größe der momentanen Reaktionskraft ($F_T$) einstellt.

2.   Reibradgetriebe (1) nach Anspruch 1, wobei die Kontaktnormalkraft ($F_N$) in Abhängigkeit von der momentanen räumlichen Position der mindestens einen Reibrolle (3, 4) und/oder
   der von der mindestens einen Reibrolle (3, 4) zu übertragenden Reibkraft und/oder
   der momentanen Umfangsgeschwindigkeit der mindestens einen Reibrolle (3, 4) und/oder
   der Getriebeöltemperatur des Reibradgetriebes (1) eingestellt wird.

3.   Reibradgetriebe (1) nach einem der Ansprüche 1 oder 2, wobei bei einer schnellen Änderung des vom Reibradgetriebe (1) übertragenden Drehmoments und einer dadurch hervorgerufenen schnellen Änderung der Reibrollenstellung die Kontaktnormalkraft ($F_N$) erhöht wird, wobei eine Änderung als schnell angesehen wird, wenn die dabei auftretende Änderungsgeschwindigkeit der Reibrollenstellung einen vorgegebenen Wert überschreitet.

4.   Reibradgetriebe (1) nach Anspruch 3, wobei bei einer vom Fahrer angeforderten schnellen Änderung des vom Reibradgetriebe (1) zu übertragenden Drehmoments und einer dadurch hervorgerufenen schnellen Änderung der Reibrollenstellung die Kontaktnormalkraft ($F_N$) erhöht wird und zwar vor Beginn der schnellen Änderung.

5.   Reibradgetriebe (1) nach einem der Ansprüche 1 bis 4, wobei es sich bei der mindestens einen überwachten Betriebsgröße um die Stellung bzw. Lage der mindestens einen Reibrolle handelt.

6.   Reibradgetriebe (1) nach einem der Ansprüche 1 bis 5, wobei es sich bei der mindestens einen überwachten Betriebsgröße um die Umfangsgeschwindigkeit an der Reibrolle im Kontaktpunkt handelt.

EP 1 431 621 A1

Fig. 1

Fig. 2

12

5

EGS $\longrightarrow$ Steuergrößen $F_N$ $\longrightarrow$ Normalkraft Steller

Normalkraft

$\underline{Fig. 3}$

1

Betriebsgrößen $\longrightarrow$ Reibpaarung

---

EGS

Betriebs-größen $\Longrightarrow$

Berechnung $F_{Nopt}$

Dynamik Anteil

+ + 

Steuergröße $F_N$

$\underline{Fig. 4}$

---

$\mu$

$\mu_s$ ....... stationär ........ $\mu_{opt}$

$\mu_{is}$ ... instationär ....

s

$\underline{Fig. 5}$

Betriebsgrößen

16

S opt

Regler | Fnopt stationär | Dynamik Anteil

S ist

Betriebsgrößen

Steuergröße FN

*Fig. 6*

17    18    5

elektr. Steuerung | I | Hydraulik/ Elektrik | I / P | Normalkraft Steller | F_N | Reib- Paarung

*Fig. 7*

17    18

elektr. Steuerung | I | Hydraulik/ Elektrik | I / P | Variable Reduzierung | I' / P' | Normalkraft Steller | F_N

Tangential Kraftsteller | F_T

7

*Fig. 8*

| elektr. Steuerung | $I_1$ / $I_2$ → | Hydraulik/ Elektrik | $I_1/p_1$ / $I_1/p_2$ → | Maximal- wert | $I/p$ → | Normal- Kraftsteller | $F_N$ → |

19

5

20

| Differenz- wert | $\Delta I/\Delta p$ → | Tangential- Kraftsteller | $F_T$ → |

7

Fig. 9

Fig. 10

Europäisches
Patentamt

**EUROPÄISCHER RECHERCHENBERICHT**

Nummer der Anmeldung

EP 03 02 7621

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,D | DE 100 47 139 A (GEN MOTORS CORP N D GES D STAA) 31. Mai 2001 (2001-05-31)<br>* das ganze Dokument * | 1,2,5,6 | F16H61/00 |
| X | WO 02 079675 A (FULLER JOHN WILLIAM EDWARD ;GREENWOOD CHRISTOPHER JOHN (GB); TOROT) 10. Oktober 2002 (2002-10-10)<br>* Seite 1-8 *<br>* Seite 21-26 *<br>* Abbildungen 1,8-11 * | 1,2 | |
| X<br><br><br><br><br>A | WO 02 053953 A (TOYOTA MOTOR CO LTD ;TAKETSUNA YASUJI (JP); TAMAKI SHIGENORI (JP)) 11. Juli 2002 (2002-07-11)<br>-& EP 1 347 215 A<br> 24. September 2003 (2003-09-24)<br>* das ganze Dokument * | 1<br><br><br><br><br>2,5,6 | |

**RECHERCHIERTE SACHGEBIETE (Int.Cl.7)**

F16H

Der vorliegende Recherchenbericht wurde für alle Patentansprüche erstellt

| Recherchenort | Abschlußdatum der Recherche | Prüfer |
|---|---|---|
| MÜNCHEN | 5. Februar 2004 | Daieff, B |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**  EP 03 02 7621

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-02-2004

| Im Recherchenbericht angeführtes Patentdokument | | Datum der Veröffentlichung | Mitglied(er) der Patentfamilie | | Datum der Veröffentlichung |
|---|---|---|---|---|---|
| DE 10047139 | A | 31-05-2001 | US | 6387009 B1 | 14-05-2002 |
|  |  |  | DE | 10047139 A1 | 31-05-2001 |
| WO 02079675 | A | 10-10-2002 | EP | 1373764 A1 | 02-01-2004 |
|  |  |  | WO | 02079675 A1 | 10-10-2002 |
| WO 02053953 | A | 11-07-2002 | JP | 2002195403 A | 10-07-2002 |
|  |  |  | EP | 1347215 A1 | 24-09-2003 |
|  |  |  | WO | 02053953 A1 | 11-07-2002 |

EPO FORM P0461

Für nähere Einzelheiten zu diesem Anhang : siehe Amtsblatt des Europäischen Patentamts, Nr.12/82